# EUROPÄISCHE PATENTSCHRIFT

(11) **EP 1 199 485 B1**
(45) Veröffentlichungstag und Bekanntmachung des Hinweises auf die Patenterteilung: **14.11.2007**
(21) Anmeldenummer: 01123011.7
(22) Anmeldetag: 26.09.2001
(51) Int. Cl.: F16C 29/06

(54) **Linearwälzlager**
Linear rolling bearing
Palier à roulement linéaire

(30) Priorität: 19.10.2000 DE 10051770
(43) Veröffentlichungstag der Anmeldung: 24.04.2002
(73) Patentinhaber: AMK Arnold Müller GmbH & Co.KG, 73230 Kirchheim / Teck (DE)
(72) Erfinder: Heinz Greiner, 73061 Ebersbach (DE)
(74) Vertreter: Kratzsch, Volkhard

(56) Entgegenhaltungen:
- EP-A- 0 826 891
- CH-A- 675 284
- DE-A- 2 030 076
- US-A- 2 503 009
- US-A- 5 221 145

## Beschreibung

Die Erfindung betrifft ein Linearwälzlager mit einer im Querschnitt profilierten oder runden, insbesondere kreisrunden, als Führungsschiene wirkenden Welle mit von deren Mantelfläche gebildeten, in Längsrichtung sich erstreckenden Laufbahnen für Wälzkörper, beispielsweise Kugeln, Zylinderrollen oder Tonnenrollen, und mit einer die Welle und die Wälzkörper umgebenden Buchse, die an ihrer inneren Oberfläche Gegenlaufbahnen für die Wälzkörper aufweist, wobei die Buchse in Längsrichtung geteilt ausgeführt und aus mehreren mit den Gegenlaufbahnen versehenen Segmenten zusammengesetzt ist, die zu den Gegenlaufbahnen parallele Anlageflächen aufweisen, über welche die Segmente in Umfangsrichtung der Buchse gegenseitig abgestützt sind.

Der Einsatzbereich solcher Linearwälzlager erstreckt sich auf Linearführungen mit begrenztem oder unbegrenztem Hubweg, mit ebenen oder runden oder profilierten Laufbahnen, wobei die Aufnahme der Buchse oder eines anders gestalteten, die Funktion der Buchse übernehmenden Elementes einen Kreis oder mehrere Kreisbahnen beschreibt. Typische Einsatzfälle können Kugelbuchsen mit geraden oder profilierten Laufbahnen sein, deren Laufbahnnormalen durch das Zentrum gehen, außerdem Kugelbuchsen mit geraden oder profilierten Laufbahnen, deren Laufbahnnormalen mit einem Hüllkreis um den Mittelpunkt einen Winkel bilden. Bekannt sind massive Kugelbuchsen mit geschlossenem Ring, Drehmomentbuchsen, wie sie beispielsweise die Druckschrift DE-A-3 736 867 zeigt, Säulenführungen für Werkzeuge und Pressenführungen, die ähnlich aufgebaut sind wie die Säulenführungen.

Kugelbuchsen mit geschlossenem Ring sind durch Außen- und Innenrundschleifen einfach herzustellen. Das gilt für die üblichen Abmessungen. Werden nun Buchsen mit großen Abmessungen benötigt, insbesondere mit großen axialen Längen, so stellt sich der Innenrundschleifprozess mit zunehmender Länge als schwierig und teuer dar. Drehmomentbuchsen sind infolge ihrer profilierten Innenkontur schwer herzustellen. Sie müssen mit profilierten kleinen Werkzeugen bearbeitet werden, was aufwendig und teuer sein kann. Dabei entstehen minimale Abträge, hohe Werkzeugverschleißraten und damit einhergehende große Toleranzstreuungen, die sich in Profilfehlern, schlechten Oberflächengüten und unbefriedigender Parallelität der Laufbahnen zur Längsachse äußern.

Aus der Druckschrift US-A-2 503 009 ist ein Linearwälzlager bekannt, dessen mit Laufbahnen versehene Buchse aus mehreren einzeln geformten Segmenten besteht, welche durch Stanzen von Blechen aus einem geeigneten Lagerstahl hergestellt sind. Hier weist jedes Segment im Bereich einer tragenden Wälzkörper-Laufbahn einen geradlinigen Abschnitt auf, welcher von einem Randabschnitt des benachbarten Segmentes überlappt wird. Für eine ausreichende Fixierung benachbarter Segmente aneinander ist hier zusätzlich eine die Welle umgebende Hülse erforderlich, an welcher die Segmente befestigt, z. B. angeschweißt sind.

Aus der Druckschrift DE-A-2 030 076 ist ein Linearwälzlager der eingangs genannten Art bekannt, bei welchem eine Buchse bzw. Hülse ebenfalls aus Segmenten zusammengesetzt ist. Zur Verbindung der Segmente miteinander ist es hier jedoch erforderlich, diese aneinander zu schweißen, wobei an den Stoßflächen benachbarter Hülsensegmente jeweils Elektronenstrahlschweißnähte angeordnet werden.

### Zusammenfassung der Erfindung

Der Erfindung liegt die Aufgabe zugrunde, ein Linearwälzlager zu schaffen, welches sich wirtschaftlich herstellen lässt und enge Toleranzen, hohe Laufbahnparallelitäten sowie eine gute Profilhaltigkeit aufweist.

Diese Aufgabe wird nach einem ersten Vorschlag erfindungsgemäß dadurch gelöst, dass die Buchse in einer Aufnahme oder Bohrung eines Anschlussbauteils angeordnet ist, wobei jeweils zwei aneinander anliegende Segmente radial gerichtete Anlageflächen mit konkaven Ausnehmungen aufweisen, die einen Hohlraum bilden, in welchem ein Abstützelement angeordnet ist.

Nach einem weiteren Vorschlag kann statt der Anordnung eines Abstützelementes jeweils die Buchse in einer Aufnahme oder Bohrung eines Anschlußbauteils angeordnet sein, wobei jedes Segment radial gerichtete Anlageflächen aufweist mit einer konvexen Erweiterung an einer der beiden Anlageflächen und mit einer konkaven Ausnehmung an der anderen der beiden Anlageflächen, wobei die konvexe Erweiterung jedes Segmentes in die konkave Ausnehmung des jeweils benachbarten Segmentes eingreift.

Auf diese Weise lassen sich bisher mit geschlossenen Ringen oder anderen geschlossenen Konturen ausgeführte Lager durch solche mit in Segmente längsgeteilten Buchsen ersetzen, wobei die Segmente verbunden oder unverbunden sein können. Die Segmente können ebene, runde oder anders profilierte Laufbahnen aufweisen. Die Längsteilung erlaubt es, mit Werkzeugen, die sehr viel größer als der Innendurchmesser einer Buchse sind, die Innenbearbeitung durchzuführen. Dadurch werden eine wirtschaftlichere Fertigung, engere Toleranzen, eine bessere Profilhaltigkeit und höhere Laufbahnparallelitäten erreicht. Die Längsteilung ermöglicht, einfache Führungselemente zu verwenden, die am Segment angebracht oder zum jeweiligen Segment positioniert werden. Dabei können sich die Segmente gegenseitig abstützen.

Eine Buchse mit geschlossener Querschnittskontur, vorzugsweise mit einer Ringkontur, wird in Längsrichtung in wenigstens zwei Teile oder Segmente aufgeschnitten. Diese tragen an der Innenseite eine oder mehrere Laufbahnen und stützen sich gegenseitig über ihre Stirnkonturen ab. Die moderne Fertigungstechnik erlaubt es, Laufbahnen und Abstützkonturen mit einer profilierten Schleifscheibe oder einem entsprechenden Werkzeug, z. B. einem Scheibenfräser, herzustellen, so daß das Werkzeugprofil Bereiche für die Bearbeitung von Laufbahnen und Bereiche für die Bearbeitung von Abstützflächen beinhaltet.

Diese Segmente werden in eine runde oder profilierte, jedoch geschlossene Aufnahme, z. B. eine Bohrung in einem Gehäuse, eingebracht, so daß sie unter einer Ringpressung stehen, die durch das Gehäuse bewirkt wird. Damit ist die radiale Lage der Segmente eindeutig festgelegt. Die Segmente können sich bei zum Zentrum wirkenden Kräften über ebene Anschlagflächen abstützen.

Wirken auf die Segmente Querkräfte ein, so findet ein Kippen um den höchsten Punkt im Segment-Rücken statt. Dabei hat eine Anschlagfläche die Tendenz, sich zum Zentrum der Führung hin zu bewegen, während die andere sich von dort fortbewegen will. Durch eine geeignete Profilierung der Anschlagflächen können sich die Segmente gegeneinander abstützen, so daß sie wie ein geschlossener Ring wirken. Durch eine höhere Präzision der Laufbahnen ergibt sich im Verhältnis zu einem geschlossenen Ring ein steiferer Kontakt, so daß bei entsprechender Gestaltung der Anschlagflächen der Nachteil der entstandenen Fugen nur eine geringe Auswirkung hat und sich insgesamt eine steifere Gesamtanordnung ergibt.

Die Segmente können in Längsrichtung zueinander festgelegt werden, und zwar durch formschlüssige Elemente, Ringe, z. B. Sicherungsringe, durch Schweißverbindungen oder durch stirnseitige Kappen. In der Aufnahme können sie einzeln oder als geschlossene Einheit mit üblichen Methoden fixiert werden, z. B. durch Sicherungsringe, Stifte oder Schrauben.

### Kurze Beschreibung der Zeichnung

Ausführungsbeispiele der Erfindung sind in der Zeichnung dargestellt und werden im folgenden näher beschrieben. Es zeigen
- Figur 1: ein als Kugelbuchse ausgebildetes Linearlager im Längsschnitt;
- Figur 2: ein als Kugelbuchse mit drei Segmenten ausgebildetes Linearlager im Querschnitt;
- Figur 3: eine stirnseitige Ansicht einer weiteren Kugelbuchse;
- Figur 4: eine Seitenansicht der Kugelbuchse nach Figur 2 mit durch Schweißen verbundenen Segmenten;
- Figur 5: eine stirnseitige Ansicht der Kugelbuchse nach Figur 4;
- Figur 6: eine Seitenansicht einer Kugelbuchse mit durch Verprägen aneinander befestigten Segmenten;
- Figur 7: einen Querschnitt der Kugelbuchse nach Figur 6;
- Figur 8: ein Linearwälzlager im Querschnitt mit ebenen Laufbahnen für als Zylinderrollen ausgebildete Wälzkörper;
- Figur 9: ein Linearwälzlager im Querschnitt mit profilierten Laufbahnen für als Tonnenrollen ausgebildete Wälzkörper.

### Ausführliche Beschreibung der Zeichnung

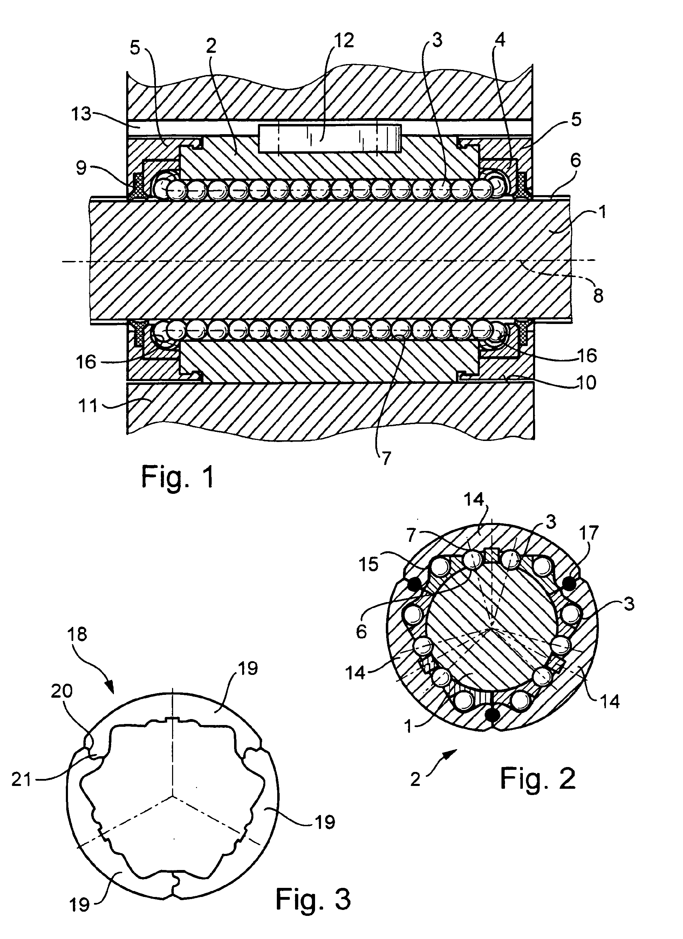

Ein in Figur 1 dargestelltes Linearwälzlager ist an einer Welle 1 angeordnet und enthält eine die Welle 1 mit einem radialen Abstand umgebende Buchse 2 und mehrere endlose Umläufe von Wälzkörpern 3, die in einem Käfig 4 geführt sind. Die Wälzkörper 3 sind hier als Kugeln ausgebildet. Die Buchse 2 kann aus mehreren Segmenten zusammengesetzt sein, welche von Stirnringen 5 zusammengehalten werden. Für tragende Wälzkörper 3 der Wälzkörperumläufe sind an der Welle 1 Laufbahnen 6 und an der Buchse 2 Gegenlaufbahnen 7 ausgebildet. Die Laufbahnen und Gegenlaufbahnen erstrecken sich parallel zur Längsachse 8 der Welle 1. Innerhalb der Stirnringe 5 sind Dichtungen 9 angeordnet, welche den Raum der sich an der Welle 1 und der Buchse 2 abstützenden Wälzkörper 3 nach außen abdichten. Die Buchse 2 ist in eine Bohrung 10 eines Anschlußbauteils 11 eingesetzt und dort mit Hilfe einer Paßfeder 12, welche in eine Längsnut 13 des Anschlußbauteils 11 hineinragt, in Umfangsrichtung festgelegt.

Wie Figur 2 zeigt, ist die Buchse 2 aus drei Segmenten 14 zusammengesetzt. Jedes Segment ist für zwei Wälzkörperumläufe vorgesehen. Während sich die tragenden Wälzkörper 3 jedes Umlaufs an der zugehörigen Laufbahn 6 der Welle 1 und der zugehörigen Gegenlaufbahn 7 der Buchse 2 abstützen, sind für rücklaufende Wälzkörper 3 zwischen der Welle 1 und der Buchse 2 Rücklaufbahnen 15 vorgesehen. Der Käfig 4 enthält für jeden Umlauf von Wälzkörpern 3 zwei Umlenkbahnen 16, durch welche die Reihe der tragenden Wälzkörper 3 mit der Reihe der Wälzkörper 3 verbunden ist, die sich in der Rücklaufbahn 15 befinden.

Die drei Segmente 14 der Buchse 2 sind in Umfangsrichtung hintereinander angeordnet und stützen sich gegenseitig über Anlageflächen ab, die zur Längsachse 8 der Welle 1 parallel verlaufen. In Figur 2 sind die Anlageflächen eben ausgebildet und weisen Ausnehmungen auf, in welchen Abstützelemente 17 angeordnet sind.

Figur 3 zeigt eine Buchse 18 mit Segmenten 19, die an den Anlageflächen konkave Ausnehmungen 20 bzw. konvexe Erweiterungen 21 aufweisen. Von zwei aneinander angrenzenden Segmenten 19 greift hier eine konvexe Erweiterung 21 des einen Segmentes 19 in eine konkave Ausnehmung 20 des anderen Segmentes 19 ein.

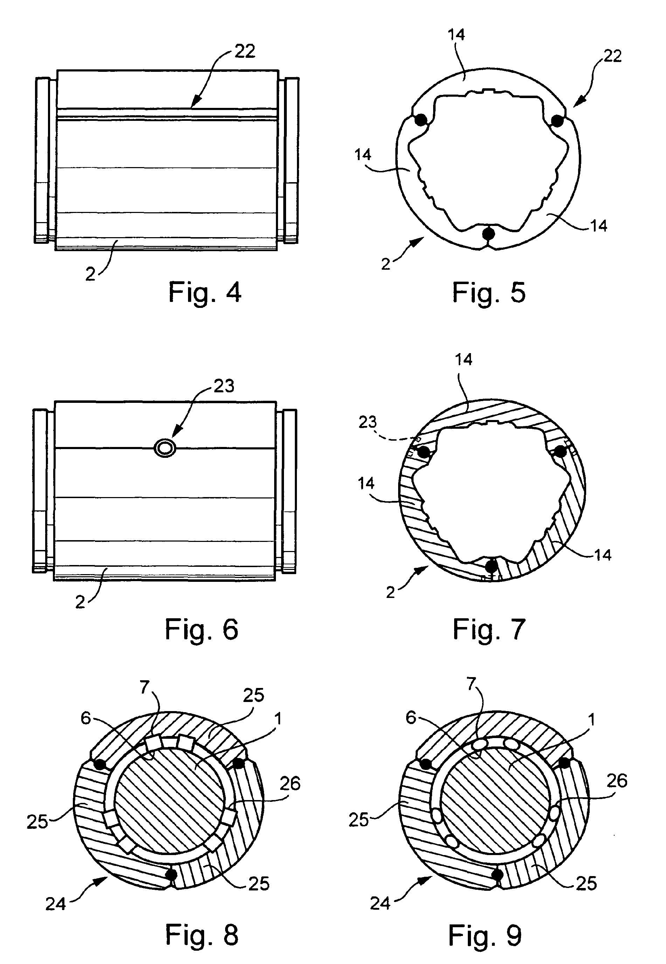

Entsprechend den Figuren 4 und 5 sind die Segmente 14 der Buchse 2 im Bereich ihrer Anlageflächen verschweißt, so daß sich dort Schweißzonen 22 ergeben.

Statt die Segmente 14 miteinander zu verschweißen können sie entsprechend den Figuren 6 und 7 auch miteinander verprägt werden, so daß sich an der Buchse 2 im Bereich der Anlageflächen der Segmente 14 Prägezonen 23 ergeben. Es ist aber auch möglich, auf das Verschweißen oder das Verprägen ganz zu verzichten und die Segmente 14 nur mit Hilfe der Stirnringe 5 zusammenzuhalten.

In Figur 8 sind zwischen der Welle 1 und der sie umgebenden Buchse 24, welche aus drei Segmenten 25 gebildet ist, die Wälzkörper 26 in der Form von Zylinderrollen ausgeführt. Daher sind hier die Laufbahnen 6 der Welle 1 und die Gegenlaufbahnen 7 der Buchse 24 eben. Dementsprechend sind in Figur 9, wo als Wälzkörper 27 Tonnenrollen verwendet sind, die Laufbahnen 6 der Welle 1 und die Gegenlaufbahnen 7 der Buchse 24 profilierte Laufbahnen.

### Bezugszahlenliste

- 1: Welle
- 2: Buchse
- 3: Wälzkörper
- 4: Käfig
- 5: Stirnring
- 6: Laufbahn
- 7: Gegenlaufbahn
- 8: Längsachse
- 9: Dichtung
- 10: Bohrung
- 11: Anschlußbauteil
- 12: Paßfeder
- 13: Längsnut
- 14: Segment
- 15: Rücklaufbahn
- 16: Umlenkbahn
- 17: Abstützelement
- 18: Buchse
- 19: Segment
- 20: konkave Ausnehmung
- 21: konvexe Erweiterung
- 22: Schweißzone
- 23: Prägezone
- 24: Buchse
- 25: Segment
- 26: Wälzkörper
- 27: Wälzkörper

## Patentansprüche

1. Linearwälzlager mit einer im Querschnitt profilierten oder runden, insbesondere kreisrunden, als Führungsschiene wirkenden Welle (1) mit von deren Mantelfläche gebildeten, in Längsrichtung sich erstreckenden Laufbahnen (6) für Wälzkörper (3, 26, 27), beispielsweise Kugeln, Zylinderrollen oder Tonnenrollen, und mit einer die Welle (1) und die Wälzkörper (3, 26, 27) umgebenden Buchse (2, 24), die an ihrer inneren Oberfläche Gegenlaufbahnen (7) für die Wälzkörper (3, 26, 27) aufweist, wobei die Buchse (2, 24) in Längsrichtung geteilt ausgeführt und aus mehreren mit den Gegenlaufbahnen (7) versehenen Segmenten (14, 25) zusammengesetzt ist, die zu den Gegenlaufbahnen (7) parallele Anlageflächen aufweisen, über welche die Segmente (14, 25) in Umfangsrichtung der Buchse (2, 24) gegenseitig abgestützt sind, **dadurch gekennzeichnet, dass** die Buchse (2, 24) in einer Aufnahme oder Bohrung (10) eines Anschlussbauteils (11) angeordnet ist, wobei jeweils zwei aneinander anliegende Segmente (14, 25) radial gerichtete Anlageflächen mit konkaven Ausnehmungen aufweisen, die einen Hohlraum bilden, in welchem ein Abstützelement (17) angeordnet ist.

2. Linearwälzlager mit einer im Querschnitt profilierten oder runden, insbesondere kreisrunden, als Führungsschiene wirkenden Welle mit von deren Mantelfläche gebildeten, in Längsrichtung sich erstreckenden Laufbahnen für Wälzkörper, beispielsweise Kugeln, Zylinderrollen oder Tonnenrollen, und mit einer die Welle und die Wälzkörper umgebenden Buchse (18), die an ihrer inneren Oberfläche Gegenlaufbahnen für die Wälzkörper aufweist, wobei die Buchse (18) in Längsrichtung geteilt ausgeführt und aus mehreren mit den Gegenlaufbahnen versehenen Segmenten (19) zusammengesetzt ist, die zu den Gegenlaufbahnen parallele Anlageflächen aufweisen, über welche die Segmente (19) in Umfangsrichtung der Buchse (18) gegenseitig abgestützt sind, **dadurch gekennzeichnet, dass** die Buchse (18) in einer Aufnahme oder Bohrung eines Anschlussbauteils angeordnet ist, wobei jedes Segment (19) radial gerichtete Anlageflächen aufweist mit einer konvexen Erweiterung (21) an einer der beiden Anlageflächen und mit einer konkaven Ausnehmung (20) an der anderen der beiden Anlageflächen, wobei die konvexe Erweiterung (21) jedes Segmentes (19) in die konkave Ausnehmung (20) des jeweils benachbarten Segmentes (19) eingreift.

3. Linearwälzlager nach Anspruch 1 oder 2, **dadurch gekennzeichnet, dass** an einem Segment (14, 19, 25) jeweils eine Gegenlaufbahn (7) mit einer Rücklaufbahn (15) und zwei diese verbindenden Umlenkbahnen (16) für einen Wälzkörperumlauf zu einer geschlossenen Linie vervollständigt ist.

4. Linearwälzlager nach Anspruch 1, **dadurch gekennzeichnet, dass** als Wälzkörper (3) Kugeln verwendet sind, wobei die Laufbahnen (6) der Welle (1) und die Gegenlaufbahnen (7) der Segmente (14) im Querschnitt jeweils kreisbogenförmig ausgebildet sind.

5. Linearwälzlager nach Anspruch 1, **dadurch gekennzeichnet, dass** die Laufbahnen (6) der Welle (1) und/oder die Gegenlaufbahnen (7) der Segmente (25) als ebene Flächen ausgebildet sind.

## Claims

1. Linear roller bearing comprising a shaft (1) of profiled or round, in particular circular cross section acting as guide rail, a circumferential surface of the shaft forming raceways (6) extending in a longitudinal direction for rolling elements (3, 26, 27), for example, balls, cylindrical rollers or barrel rollers, the bearing further comprising a bushing (2, 24), which surrounds the shaft (1) and the rolling elements (3, 26, 27) and which on its inner surface has opposing raceways (7) for the rolling elements (3, 26, 27), the bushing (2, 24) being longitudinally divided and composed of a plurality of segments (14, 25), which are provided with the opposing raceways (7) and have contact faces parallel to the opposing raceways (7) and serving for reciprocal support of the segments (14, 25) in the circumferential direction of the bushing (2, 24), **characterized in that** the bushing (2, 24) is arranged in a seat or bore (10) in an adjoining component (11), each two segments (14, 25) bearing against one another having radially oriented contact faces with concave recesses, which form a cavity in which a support element (17) is arranged.

2. Linear roller bearing comprising a shaft of profiled or round, in particular circular cross section acting as guide rail, a circumferential surface of the shaft forming raceways extending in a longitudinal direction for rolling elements, for example, balls, cylindrical rollers or barrel rollers, the bearing further comprising a bushing (18), which surrounds the shaft and the rolling elements and which on its inner surface has opposing raceways for the rolling elements, the bushing (18) being longitudinally divided and composed of a plurality of segments (19), which are provided with the opposing raceways and have contact faces parallel to the opposing raceways and serving for reciprocal support of the segments (19) in the circumferential direction of the bushing (18), **characterized in that** the bushing (18) is arranged in a seat or bore in an adjoining component, each segment (19) having radially oriented contact faces with a convex extension (21) on one of the two contact faces and with a concave recess (20) on the other of the two contact faces, the convex extension (21) of each segment (19) engaging in the concave recess (20) in the respectively adjacent segment (19).

3. Linear roller bearing according to Claim 1 or 2, **characterized in that** one opposing raceway (7) on each segment (14, 19, 25) is supplemented by a return raceway (15) and two reverse tracks (16) connecting this for a recirculation of the rolling elements in a closed line.

4. Linear roller bearing according to Claim 1, **characterized in that** balls are used as rolling elements (3), the raceways (6) in the shaft (1) and the opposing raceways (7) in the segments are each of circular arc-shaped cross section.

5. Linear roller bearing according to Claim 1, **characterized in that** the raceways (6) in the shaft (1) and/or the opposing raceways (7) in the segments (25) are embodied as plane faces.

## Revendications

1. Palier de roulement linéaire qui présente un arbre (1) à section transversale profilée ou ronde et en particulier circulaire, qui agit comme rail de guidage, ainsi que des pistes de roulement (6) formées dans la surface de l'enveloppe de cet arbre et qui s'étendent dans le sens de sa longueur, pour des corps de roulement (3, 26, 27), par exemple des billes, des galets cylindriques ou des galets en tonneau, et une douille (2, 24) qui entoure l'arbre (1) et les corps de roulement (3, 26, 27) et qui présente sur sa surface intérieure des pistes complémentaires de roulement (7) pour les corps de roulement (3, 26, 27), la douille (2, 24) étant divisée dans le sens de sa longueur et constituée de l'assemblage de plusieurs segments (14, 25) dotés de pistes complémentaires de roulement (7) et qui présentent des surfaces de pose parallèles aux pistes complémentaires de roulement (7) et par lesquelles les segments (14, 25) se soutiennent mutuellement dans le sens de la périphérie de la douille (2, 24), **caractérisé en ce que** la douille (2, 24) est disposée dans un logement ou un alésage (10) d'un composant de raccordement (11), les segments (14, 25) reposant l'un contre l'autre deux à deux présentant à chaque fois des surfaces de pose orientées radialement et dotées de découpes concaves qui forment un espace creux dans lequel un élément de soutien (17) est disposé.

2. Palier de roulement linéaire qui présente un arbre à section transversale profilée ou ronde et en particulier circulaire, qui agit comme rail de guidage, ainsi que des pistes de roulement formées dans la surface de l'enveloppe de cet arbre et qui s'étendent dans le sens de sa longueur, pour des corps de roulement, par exemple des billes, des galets cylindriques ou des galets en tonneau, et une douille (18) qui entoure l'arbre et les corps de roulement et qui présente sur sa surface intérieure des pistes complémentaires de roulement pour les corps de roulement, la douille (18) étant divisée dans le sens de sa longueur et constituée de l'assemblage de plusieurs segments (19) dotés de pistes complémentaires de roulement et qui présentent des surfaces de pose parallèles aux pistes complémentaires de roulement (7) et par lesquelles les segments (19) se soutiennent mutuellement dans le sens de la périphérie de la douille (18), **caractérisé en ce que** la douille (18) est disposée dans un logement ou un alésage d'un composant de raccordement, chaque segment (19) présentant des surfaces de pose orientées radialement et dotées d'un évasement convexe (21) sur l'une des deux surfaces de pose et d'une découpe concave (20) sur l'autre des deux surfaces de pose, l'évasement convexe (21) de chaque segment (19) s'engageant dans la découpe concave (20) du segment (19) voisin respectif.

3. Palier de roulement linéaire selon la revendication 1 ou 2, **caractérisé en ce que** sur un segment (14, 19, 25), un piste complémentaire de roulement (7) est complétée à chaque fois par une piste de retour (15) et deux pistes de renvoi (16) qui les relient pour permettre une circulation des corps de roulement le long d'une ligne fermée.

4. Palier de roulement linéaire selon la revendication 1, **caractérisé en ce que** l'on utilise des billes comme corps de roulement (3), les pistes de roulement (6) de l'arbre (1) et les pistes complémentaires de roulement (7) des segments (14) ayant toutes une section transversale en arc de cercle.

5. Palier de roulement linéaire selon la revendication 1, **caractérisé en ce que** les pistes de roulement (6) de l'arbre (1) et/ou les pistes complémentaires de roulement (7) des segments (25) sont configurées sous la forme de surfaces planes.
